# EUROPEAN PATENT SPECIFICATION

(11) **EP 0 350 271 B1**
(45) Date of publication and mention of the grant of the patent: **29.06.1994**
(21) Application number: 89306791.8
(22) Date of filing: 04.07.1989
(51) Int. Cl.: G01N 1/28

(54) **Method and apparatus for ultrafast microwave tissue fixation**
Verfahren und Vorrichtung zur schnellen Fixierung von Geweben
Procédé et dispositif de fixation ultrarapide de tissus

(30) Priority: 05.07.1988 US 215168
(43) Date of publication of application: 10.01.1990
(73) Proprietor: RAYTHEON COMPANY, Lexington Massachusetts 02173 (US)
(72) Inventor: Dudley, Kenneth W., Sudbury Massachusetts (US); Teich, Wesley W., Wayland Massachusetts (US); Sklenak, John S., Sudbury Massachusetts (US)
(74) Representative: Jackson, David Spence

(56) References cited:
- WO-A-87/00004
- FR-A- 2 565 348
- JOURNAL OF HISTOCHEMISTRY AND CYTOCHEMISTRY, vol. 34, no. 3, March 1986, pages 381-387, New York, US; G.R. LOGIN et al.: "Ultrafast microwave energy fixation for electron microscopy"

## Description

This invention relates to apparatus for fixating tissue, comprising:
means for holding tissue submerged in a fixating solution; and
means for exposing the tissue and the solution to radio frequency energy.

As is well known, pathologists diagnose diseases by examining tissue samples from biopsies or other similar medical procedures. Because it is important that the cells be examined in a state as close to the living state as possible, the tissue samples are typically put through a chemical fixation process in order to stop the cells from degrading. More specifically, the samples are typically immersed in a preserving solution which commonly includes formaldehyde. The solution penetrates the walls of the cells, hardens the cell structure and thereafter prevents or greatly retards further degradation. Subsequently, a pathologist subjects the sample to various tests and examinations for diagnosis.

One significant problem of the above-described fixation process is that it takes a relatively long period of time, such as, for example, eight hours, for the preserving solution to penetrate the cell walls. Accordingly, the fixation process may prevent a relatively fast diagnosis. Also, at least during the early stages of fixation, the cells continue to degrade. This delay may cause the cells to change from their original living state, and, in some cases, may cloud the diagnosis.

In the prior art, it has been found that microwave energy speeds up the penetration of the preserving solution into cells. More specifically, in order to speed up the fixation process, submersed tissue samples have been placed in multimodal microwave ovens. When a multimode oven is used, the specimen is placed in a vial with a formaldehyde solution and then placed within a microwave oven cavity. The microwave oven is then powered on for a period of one to two minutes. For reasons not fully understood but apparently related to the vibration of molecules, the presence of the microwave field greatly increases the rate at which the fixation solution penetrates the cell walls. For example, the microwave field may reduce a typical fixation process from several hours down to about 1 minute.

WO-A-87/00004 describes such a method. Specifically, the method of WO-A-97/00004 involves placing a tissue specimen in a container of relatively large volume (approximately 4 litres) of a fixation solution such as ethanol, physiologic saline, or 10% buffered formalin. Alternatively, the specimen is placed repeatedly in smaller containers, such as staining dishes, of the solution, or the specimen can be carried in a staining dish containing 100% ethanol at less than 0°C. The specimen in the solution is exposed to a microwave emission source. The duration of exposure depends on the size and consistency of the specimen. For example, a bone specimen of approximately 0.5cm x 3.0cm is placed in 4000 millilitres of 100% ethanol at -10°C. The specimen is free-hanging and emersed as deep as possible in the ethanol but not closer than 1cm from the bottom of the container. The container is then placed in a microwave oven with power set to 600 watts. The exposure duration is 10 minutes to achieve fixation without burning the specimen. The process is repeated if the bone specimen is larger.

The method of fixating cells using a multimode microwave oven has presented certain disadvantages. A multimode cavity has wide dispersion of microwave energy. This dispersity results in the specimen being heated in a non-uniform manner, thereby causing the specimen to have hot or cold spots. In some cases, cells in hot spots will be destroyed and cells in cold spots will not become fixated.

In addition, using a multimode microwave oven presents the problem of an inconsistency of results every time the microwave oven is used. A multimode microwave oven has the fields constantly changing throughout the oven. These changes cause a different heat pattern within the specimen each time the specimen is fixated. Inconsistency of fixation causes errors in analysis because the pathologist needs a stable baseline in which to make his diagnosis.

Other problems with a multimode oven include requiring the use of a very high power magnetron. In a multimode cavity, microwave energy is spread over a large area. This dispersion of microwave energy may result in a low concentration of energy being distributed to the specimen. Accordingly, to get a high concentration into the specimen requires a high power microwave energy source.

It has also been observed that when the specimen or sample touches the side of a vial during fixation in a microwave single mode cavity, hot spots develop on the sample at the point where the sample touches the vial. These hot spots could destroy the specimen and cause invalid diagnosis when the specimen is looked at under a microscope.

Also, if there is any moisture on a vial in a single mode microwave cavity, the vial may be subject to cracking when exposed to higher power microwave energy.

Finally, using a microwave oven to fixate cells causes problems with the amount of exposure to the cell. In a typical microwave oven, the cell exposure time that can only be adjusted on a second-to-second basis. During fixation, it is sometimes desirable to expose the cell to a specified length of time accurate to within one-hundreth of a second.

An object of this invention is to provide an improved apparatus for fixating tissue.

According to the invention, an apparatus of the kind defined hereinbefore at the beginning is characterised in that the exposing means comprises a waveguide having a cavity formed therein with a first section, a second section, and a transition section formed therebetween, said waveguide having an opening at one end and a wall at the other end; means for transmitting radio frequency energy through said opening and into said cavity; an aperture disposed within the waveguide for insertion of the tissue holding means within the second section, the aperture being positioned on the waveguide to cause a substantially uniform E field of said radio frequency energy through the tissue holding means when inserted; and impedance matching means, disposed within said second section for providing impedance within the waveguide wherein minimal microwave energy is reflected back to the transmitting means.

A preferred embodiment of this invention provides a tissue fixation device that provides a uniform energy field throughout the tissue being fixated;
fixates tissue in a consistent manner from sample to sample;
accurately controls the microwave energy absorbed by the tissue being fixated;
is able to precisely adjust the duration of the radio frequency energy across the tissue being fixated; and
transmits the majority of the microwave energy from the microwave energy source and transmits that energy across the tissue being fixated.

A preferred method according to this invention provides for the testing of the microwave cavity to determine where to position the tissue to be fixated in order to maximize the power going into the tissue.

A further preferred feature of apparatus embodying the invention is an apparatus that removes moisture from a vial to prevent the vial from cracking when the vial is subjected to microwave energy.

A preferred embodiment of the invention takes the form of an apparatus for fixating tissue comprising means for holding the tissue submerged in a fixating solution; a waveguide having a cavity with a first section, a second section and a transitional section formed therebetween, the waveguide having an opening at one end and a wall at the other end; means for transmitting radio frequency energy through the opening into the first and the second section; an aperture disposed within the waveguide for inserting the tissue holding means within the second cavity, the aperture being positioned on the waveguide to cause a substantially uniform E field of the radio frequency energy through the tissue holding means when inserted; impedance matching means, disposed within the second section for providing impedance within the waveguide wherein minimal microwave energy is reflected back to the transmitting means;
means for adjusting the length that the tissue holding means protrudes into the second section so as to finally adjust the radio frequency energy reflection within the waveguide;
means for choking microwave energy escaping through the aperture from the waveguide ; and
means for preventing moisture or ionized gas from collecting on the tissue holding means. The apparatus may comprise test means for measuring the amount of microwave energy reflected in the waveguide; and circulator means, disposed between the microwave generating means and the waveguide for distributing microwave energy from the microwave generating means into the cavity and distributing reflected energy from the cavity to the test means. It may be preferable that the tissue holding means includes a vial. It may also be preferable that the vial contains means, disposed adjacent the inside perimeter of the vial, for preventing the tissue from touching the sides of the vial. It may preferable that the waveguide is single mode resonant.

The invention may be further practiced by a method of fixating tissue comprising the steps of: placing the tissue to be fixated in a fixation solution in a container and exposing the tissue and the solution to radio frequency energy, characterised by placing the container in a waveguide having a cavity with first and second sections formed therein, providing radio frequency energy in the waveguide such that substantially uniform E field forms through the container, and providing an impedance within the cavity wherein minimal radio frequency energy is reflected back out of the waveguide. It may be preferable that the fixating of tissue comprise the step of adjusting the length that the container protrudes into the second section, so as to finally adjust the matching impedance within the waveguide. The method of fixating tissue may further comprise the step of: preventing radio frequency energy from escaping from where the container is inserted into the waveguide. The method of fixating tissue may also comprise the step of preventing moisture from collecting on the outer surface of the container. The method of fixating tissue may further comprise the steps of suspending tissue in the center of the container and preventing the tissue from touching the sides of the container. Also, the method of fixating tissue may comprise the steps of adjusting the duration of radio frequency energy in the waveguide. Alternatively, the method of fixating tissue may comprise the steps of providing a lower power level radio frequency energy to the container, measuring the reflected power of the radio frequency energy, and adjusting the length the tissue holding means protrudes into the second section, so as to reduce the reflected power level.

### Brief Description of the Drawings

The foregoing objects and advantages will be more fully understood by reading the Description of the Preferred Embodiments with reference to the drawings wherein:
FIG. 1 is a sectioned view of a fixation device embodying the present invention;
FIG. 2 is a top view taken along line 2-2 in FIG. 1;
FIG. 3 is a sectioned view of the vial shown in FIG. 1; and
FIG. 4 is a diagram of an alternative embodiment of the fixation device using a microwave circulator and a test device.

### Description of the Preferred Embodiments

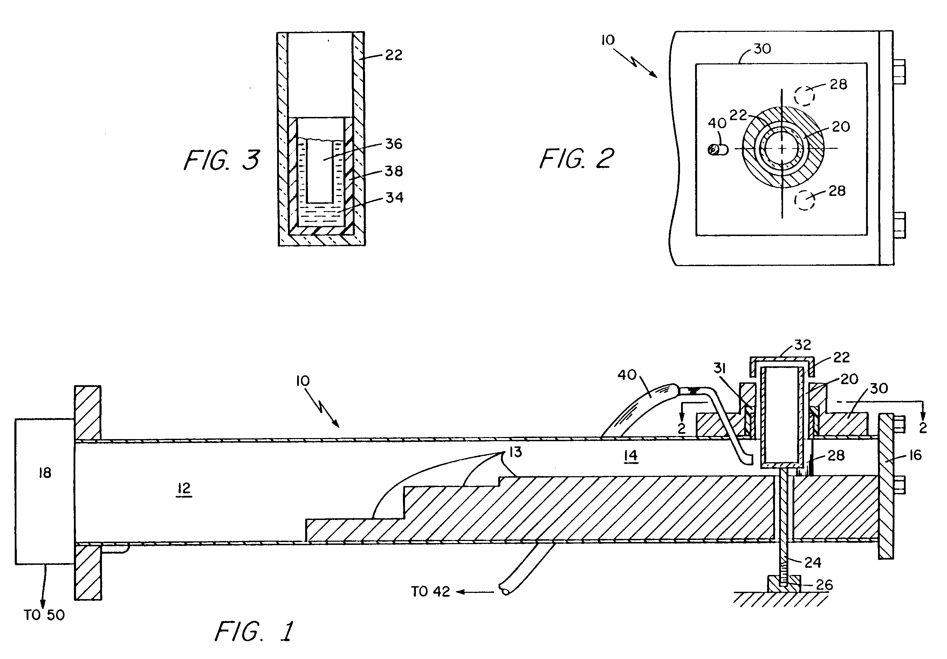

Referring now in detail to the drawings and particularly to FIGS. 1 and 2 thereof, there is shown an illustration of a single-mode resonant waveguide embodying the present invention, generally designated by the reference numeral 10. However, a full height cavity could be easily substituted.

The waveguide 10 having a width of 6.35-11.43cm (2.5-4.5 inches) and a height of 3.175-5.842cm (1.25-2.3 inches) generally includes a first section 12 and a transitional section having one or more steps 13 leading up to a second section 14. The steps shown have increments of 0.76 to 2.54cm (.3 to 1.0 inches). At one end of waveguide 10 bordering second section 14 is wall 16. The other end of waveguide 10 is connected to magnetron 18. Typically, magnetron 18 has a power of .5 to 5.0 KW and generates the microwave energy into the waveguide 10. Although many microwave frequencies will be suitable for this apparatus, the preferable frequencies are 2.450 GHz and 915 MHz. These preferable frequencies are the ones approved by the FCC for microwave oven operation.

The dimensions given for FIG. 1 and 2 are for one exemplary waveguide that has a magnetron 18 generating microwave energy at a frequency of 2.450 GHz.

On the top surface of waveguide 10 above second section 14 is aperture 20 having a diameter of approximately 1.6cm (5/8"). Second section 14 has a reduced height, relative to first section 12, of 1.78cm (.7 inches). Inserted into aperture 20 is a removable glass vial 22. Glass vial 22 is supported by post 24 which is screwed into vernier adjustment or tuner 26. Center of aperture 20 is positioned on waveguide 10 approximately one-quarter (2.450 GHz) wavelength from wall 16 to provide a uniform field through glass vial 22 when glass vial 22 is inserted into aperture 20 and second cavity 14.

Also disposed within second section 14 between glass vial 22 and wall 16 are inductive posts 28. Inductive posts 28 are positioned in second section 14 behind the aperture 20, approximately 3.8cm (1.5") from the wall 16 and approximately 3.3cm (1.3") from the sides of waveguide 10. Inductive posts 28 maximizes the E field through glass vial 22 and minimizes reflection to magnetron 18 (see FIG. 2).

Disposed adjacent waveguide 10 over second section 14 is choke 30. Choke 30 has a slot 31 with an opening positioned a quarter wavelength (4.32cm (1.7 inches) for 2.450 GHz) above the top of waveguide 10 to prevent microwave energy from leaving waveguide 10. During operation, vial 22 is inserted into aperture 20 within choke 30. If vial 22 is made of a glass, plastic or ceramic material, microwave energy will not escape from waveguide 10 through aperture 20.

Disposed on top of choke 30 is metal cover 32. Metal cover 32 may be used to provide added safety from microwave energy leakage. Also, metal cover 32 prevents any spattering of solution 34 in vial 22 from escaping from waveguide 10.

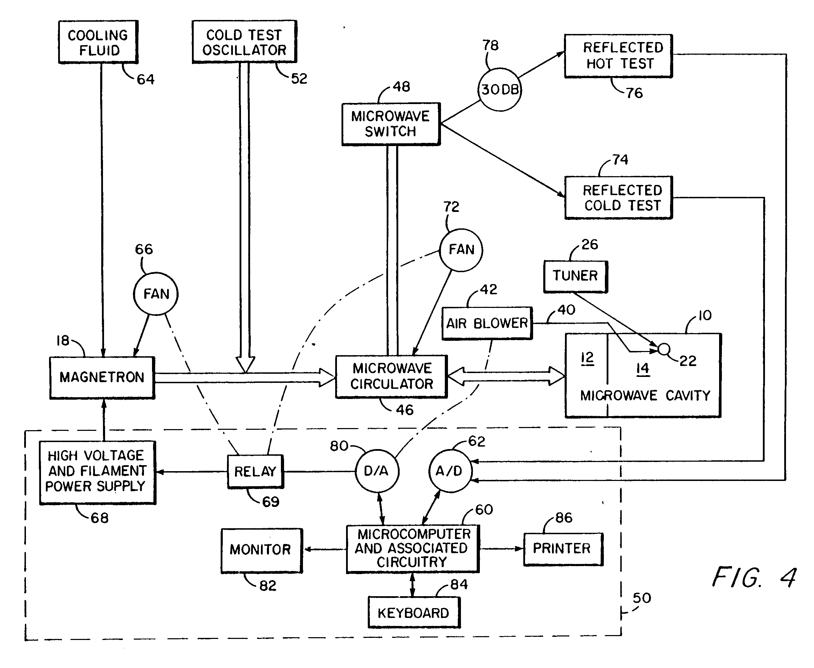

Optionally, coupled to waveguide 10 between glass vial 22 and magnetron 18 is air duct 40. Coupled to air duct 40 outside waveguide 10 is blower 42 (FIG. 4). Blower 42 provides nitrogen or other gas to glass vial 22 to remove moisture or any ionized gas from gathering on or around glass vial 22 when magnetron 18 is operating. The blower 42 is preferably a tank of nitrogen gas which is turned on during operation. By preventing moisture from gathering in front of glass vial 22, both a greater E field is provided throughout glass vial 22 and arcing is prevented around glass vial 22. Arcing could cause glass vial 22 to crack.

Coupled to magnetron 18 is control device 50 (FIG. 4). Control device 50 energizes magnetron 18. Control device 50 comprises a microcomputer 60 (FIG. 4) coupled to a relay 69 (FIG. 4) which is then coupled to the power supply 68 (FIG. 4). The relay 69 internally connects power supply to magnetron 18 to energize magnetron 18. By having a microcomputer 60 control the relay 69 (FIG. 4) connect time, the time period that magnetron 18 is turned on can be accurately and precisely controlled. This time period can range from one-hundredth of a second to several minutes. Further, the control device 50 can make the turn on time of magnetron 18 accurate to 0.001 seconds.

Referring to FIG. 3, there is shown the glass vial 22 used in waveguide 10 that holds sample 36. This vial 22 is typically made from a glass, a ceramic material or a plastic material. To prepare a vial 22, formaldehyde perserving solution 34 is placed in the vial 22. The sample 36 is then inserted into vial 22 and submerged in the solution 34. Optionally, open cell foam 38 may be inserted along the inside perimeter of glass vial 22. The foam 38 rests along the inside perimeter of glass vial 22. Though the fixation process may be done without foam 38, foam 38 provides a mechanism for preventing sample 36 from touching the sides of glass vial 22. Sample 36 touching the glass vial 22 during fixation operation could create hot spots within sample 36. The thickness of foam 38 is typically 0.16 to 0.32cm (one-sixteenth to one-eighth of an inch).

To prepare a sample using foam 38, first the glass vial 22 is filled with foam 38 along the inside perimeter and bottom of glass vial 22. Formaldehyde preseving solution 34 is then placed in vial 22 and finally sample 36 is then placed in the vial 22. The vial 22 is then placed in waveguide 10 through aperture 20 such that the sample 36 is disposed below the top surface of waveguide 10 and in second section 14.

During operation, the control device 50 turns on magnetron 18 which energizes waveguide 10 with microwave energy. The magnetron 18 is turned on between .01 and 2 seconds depending on the size of the sample 36 and the power of the magnetron 18. Typically for a 2KW magnetron 18 and a 2 cc sample size power is applied for 75 ms. When magnetron 18 is energized, microwave energy travels down waveguide from first section 12 to second section 14. Second section 14 provides an impedance match to minimize reflection in the waveguide 10. Further, the geometry of the waveguide is set up to provide maximum power transfer into the sample, thereby providing controlled heating. Also, using single mode waveguide 10 (rather than a multimode microwave oven) to fixate a sample 36, the fixation process time can be reduced from minutes to milliseconds.

Vernier adjustment or tuner 26, which is connected to member 44, may be turned to adjust the distance that vial 22 protrudes through aperture 20 into second section 14. This tuner 26 finely tunes the E field within vial 22 to minimize the reflection, thereby maximizing energy to the sample 36 and maximizing the fixation rate.

Referring to FIG. 4, shown is a block diagram of an alternative embodiment of the apparatus with a waveguide 10 having a magnetron 18, a microwave circulator 46, cold test oscillator 52, microwave switch 48 and control device 50. This configuration provides for low-level testing using cold test oscillator 52 to reduce reflection in waveguide 10 before the magnetron 18 is powered on.

Waveguide 10 has a first section 12 and second section 14 and a tuner 26 as shown in FIG. 1. Magnetron 18 supplies energy in waveguide 10. Connected to magnetron 18 is cooling fluid 64 and fan 66 to prevent magnetron 18 from overheating. Supplying power to magnetron 18 is a high voltage filament power supply 68. Connected to power supply 68 is relay 69. Relay 69 enables and disables power supply 68.

Cold test oscillator 52 is connected to circulator 46 and provides a lower power source (milliwatt) to test waveguide 10. Circulator 46 distributes energy to waveguide 10 from cold test oscillator 52 and magnetron 18. Circulator 46 is cooled by fan 72. Circulator 46 has three ports. The first port is connected to waveguide 10. The second port is connected to magnetron 18 and cold test oscillator 52. The third port of the circulator 46 is connected to a matching microwave load. A sample probe is inserted into the load, taps a small amount of the reflected power and sends it to switch 48.

Microwave switch 48 connects microwave circulator 46 to a reflected cold test channel 74 and to a reflected hot test channel 76. Hot test channel 76 and cold test channel 74 are each connected to a separate crystal detector (not shown) which is connected to A/D converters 62 within control device 50. Between microwave switch 48 and the reflected hot test channel 76 is a 30dB attenuator 78 that reduces power into the hot test channel 76 to prevent overheating of the A/D converter 62. Microwave switch 48 deflects microwave energy from waveguide 10 into reflected hot test channel 76 and a reflected cold test channel 74.

Within control device 50 is microcomputer and associated circuitry 60, the A/D converter 62, a D/A converter 80, relay 69 and power supply 68. Microcomputer 60 is connected to A/D converter 62 to process the results of the reflected cold test and reflected hot tests. Microcomputer 60, via relay 69, turns the fans 66 and 72 off and on. Microcomputer 60 via D/A converter 80 regulates the stream of nitrogen to the glass vial 22 with an electrically controlled solenoid (not shown) connected between air duct 40 and air blower 42. Microcomputer 60 also monitors the temperature within the vial 22 with a temperature probe (not shown). After microwave irradiation, the vial is lifted up to allow insertion of the temperature probe.

Connected to microcomputer 60 within control device 50 is the D/A converter 80, a monitor 82, a key-board 84 and a printer 86. D/A converter 80 connects to relay 69 to allow microcomputer 60 to control power to magnetron 18, fan 66 and fan 72. D/A converter 80 has a variable level set by microcomputer 60. The output from D/A converter 80 is raised to a predetermined voltage level which energizes relay 69 resulting in power flowing to power supply 68, fan 66 and fan 72. Monitor 82 displays the results of all testing and provides a human interface for the user to control the fixation device. Keyboard 84 allows for the user to set the parameters of the testing. Printer 86 allows a recording of test results. Depending on the results of the test, waveguide 10 is finely tuned by tuning vernier adjustment post 26 to provide a minimum amount of reflection, as previously described.

During operation, the glass vial 22 is filled with about 2 cc of solution 34 and sample 36. The vial 22 is then inserted into waveguide 10, as previously described in connection with FIG. 3. The cold test oscillator 52 is then turned on, which sends microwave energy through circulator 46 and into waveguide 10. The microwave energy then reflects off of back wall 16 and into circulator 46. The reflected microwave energy is then distributed to microwave switch 48 which sends that energy to reflected cold test channel 74 where the energy is coupled to A/D converter 62. The energy level is then read by microcomputer 60. If microcomputer 60 determines that the reflected energy is too large, tuner 26 is then turned to reduce the amount of the reflection.

After the low-level test has been completed, the magnetron 18 is enabled by microcomputer 60, which turns on power supply 68. Once power supply 68 is turned on, magnetron 18 then turns on, and sends high power microwave energy into waveguide 10 via circulator 46. Microwave energy is then transmitted down waveguide 10 and into glass vial 22. The sample then fixates in the formaldehyde solution 34, as previously described in connection with FIG. 3.

The reflection of microwave energy in waveguide 10 is distributed into the matching load and probe within microwave circulator 46. The energy is then distributed to microwave switch 48, through 30dB attenuator 78 and into hot test channel 76. The A/D converter 62 then samples the signal in the hot test channel 76. The microcomputer 60 then reads the value of A/D converter 62 and prints the value of the reflection amplitude. The reflection amplitude value can be saved within the microcomputer's associated circuitry 60 for later retrieval.

Because of the uniformity of the E field and the accuracy of the power on time, the same fixation result is obtained from sample to sample. This consistency provides a stable baseline for the pathologist to do quality testing and obtain similar results.

Having described preferred embodiments of this invention, it is now evident that other embodiments incorporating these concepts may be used. The invention should not be restricted to the disclosed embodiments, but should be limited only by the scope of the appended claims.

## Claims

1. An apparatus for fixating tissue, comprising:
means (22,38) for holding tissue (36) submerged in a fixating solution (34); and means (18,10) for exposing the tissue (36) and the solution (34) to the radio frequency energy, characterised in that the exposing means (10) comprises
a waveguide (10) having a cavity formed therein with a first section (12), a second section (14), and a transition section (13) formed therebetween, said waveguide (10) having an opening at one end and a wall (16) at the other end;
means (18) for transmitting radio frequency energy through said opening and into said cavity;
an aperture (20) disposed within the waveguide (10) for insertion of the tissue holding means (22,38) within the second section (14), the aperture (20) being positioned on the waveguide (10) to cause a substantially uniform E field of said radio frequency energy through the tissue holding means (22,38) when inserted; and
impedance matching means (28), disposed within said second section (14) for providing impedance within the waveguide (10) wherein minimal microwave energy is reflected back to the transmitting means (18).

2. An apparatus according to claim 1, characterised by
means (24,26) for adjusting the length that the tissue holding means (22,38) protrudes into said second section (14) so as to finely adjust the radio frequency energy reflection within the waveguide (10).

3. An apparatus according to claim 1 or 2, characterised by
means (30) for choking microwave energy escaping through said aperture (20) from the waveguide (10).

4. An apparatus according to claim 1 or 2 or 3, characterised by
means (40,42) for preventing moisture or any ionized gas from collecting on the tissue holding means (22,38).

5. An apparatus according to any preceding claim, characterised by
test means (50,48,74,76) for measuring the amount of microwave energy reflected in said waveguide; and
circulator means (46), disposed between the microwave transmitting means (18) and the waveguide (10), for distributing microwave energy from the microwave transmitting means (18) into said cavity and distributing reflected energy from said cavity to the test means (50,48,74,76).

6. An apparatus according to any preceding claim, characterised in that the tissue holding means includes a vial (22).

7. An apparatus according to any preceding claim, characterised in that the impedance matching means is in the form of inductive posts (28) positioned between said aperture (20) and said wall (16).

8. An apparatus according to claim 6, characterised in that the vial (22) contains means (38), disposed adjacent the inside perimeter of the vial (22), for preventing said tissue (36) from touching the sides of the vial (22).

9. An apparatus according to claim 8, characterised in that the preventing means (38) is disposed adjacent the bottom of the vial (22).

10. An apparatus according to claim 9, characterised in that the preventing means is foam (38) which is 0.0254 to 0.762 cm (0.01 to 0.3 inches) thick.

11. An apparatus according to any preceding claim, characterised in that the waveguide (10) is single mode resonant.

12. An apparatus according to any preceding claim, characterised in that the second section (14) forms a reduced height waveguide.

13. An apparatus according to any preceding claim, characterised in that the waveguide (10) has a width of 6.35 to 11.43cm (2.5 to 4.5 inches) and a height of 3.175 to 5.842cm (1.25 to 2.3 inches).

14. A method of fixating tissue, comprising the steps of:
placing the tissue (36) to be fixated in a fixation solution (34) in a container (22), and exposing the tissue (36) and the solution (34) to radio frequency energy, characterised by
placing the container (22) in a waveguide (10) having a cavity with first and second sections (12,14) formed therein:
providing (18) radio frequency energy in the waveguide (10) such that substantially uniform E field forms through said container (22); and
providing impedance within said cavity wherein minimal radio frequency energy is reflected back out of the waveguide (10).

15. A method according to claim 14, characterised by the step of adjusting the length that said container (22) protrudes into said second section (14) so as to finely adjust the matching impedance within the waveguide (10).

16. A method according to claim 14 or 15, characterised by the step of preventing radio frequency energy from escaping from where said container (22) is inserted into the waveguide (10).

17. A method according to any one of claims 14 to 16, characterised by the step of preventing moisture from collecting on the outer surface of said container (22).

18. A method according to any one of claims 14 to 17, characterised by the steps of suspending tissue (36) in the center of said container (22) and preventing said tissue (36) from touching the sides of said container (22).

19. A method according to any one of claims 14 to 18, characterised by the step of adjusting the duration of radio frequency energy in the waveguide 10.

20. A method according to any one of claims 14 to 19, characterised by the steps of:
providing (52) a lower power level radio frequency energy to said container (22);
measuring (48,74,50) the reflected power level of said radio frequency energy; and
adjusting the length said container (22) protrudes into said second section (14) so as to reduce said reflected energy.

21. An apparatus for fixating tissue, comprising:
means (22) for holding tissue (36) submerged in a fixating solution (34); and means (18,10) for exposing the tissue (36) and the solution (34) to radio frequency energy, characterised in that the means for holding tissue (36) comprises a vial (22); and the exposing means comprises: a single mode resonant waveguide (10) having a cavity with a first section (12) and a second section (14) formed therein, the waveguide (10) having an opening at one end and a wall (16) at the other end;
means (18) for transmitting radio frequency energy through said opening into said cavity;
an aperture (20) disposed within the waveguide for insertion of the vial (22) within said second section (14), the aperture (20) being positioned on the waveguide (10) to cause a substantially uniform E field of said radio frequency energy through the vial (22) when inserted; and
an inductive post (28), disposed within said second section (14) to provide impedance within the waveguide (10) wherein minimal microwave energy is reflected back to the transmitting means (18).

22. An apparatus according to claim 21, characterised in that said second section (14) has a reduced height relative to said first section (12).

23. An apparatus according to claim 21 or 22, characterised by a vernier adjustment post (24) protruding into said second section (14) and supporting the vial (22), the adjustment post having a means (26) for adjusting the length of the adjustment post (24) that protrudes into said cavity so as to finely adjust the amount of radio frequency energy hitting said tissue (36).

24. An apparatus according to any one of claims 21 to 23, characterised by means (38) disposed adjacent the inside perimeter of the vial (22) for preventing tissue (36) from touching the sides of the vial (22).

25. An apparatus according to any one of claims 21 to 24, characterised by means, having an air duct (40) and a blower (42) for preventing moisture or ionized gas from collecting on the outside of the vial (22) by blowing air on the vial (22) when the vial (22) is in said second section (14).

26. An apparatus according to any one of claims 21 to 25, characterised in that the waveguide (10) has a width of 6.35 to 11.43 cm (2.5 to 4.5 inches) and a height of 3.175 to 5.842 cm (1.25 to 2.3 inches).

## Patentansprüche

1. Apparat zum Fixieren von Gewebe mit:
Mitteln (22, 38), um Gewebe (36) in eine Fixierlösung (34) eingetaucht zu halten; und Mittel (18, 10), um das Gewebe (36) und die Lösung (34) der Hochfrequenzenergie auszusetzen,
dadurch gekennzeichnet, daß die soeben genannten Mittel (10) folgendes umfassen:
eine Wellenleitung (10), in der eine Kammer mit einem ersten Abschnitt (12), einem zweiten Abschnitt (14) und einem Übergangsabschnitt (13) dazwischen gebildet ist, wobei die Wellenleitung (10) an einem Ende eine Öffnung und am anderen Ende eine Wand (16) aufweist;
Mittel (18) zur Sendung von Hochfrequenzenergie durch die genannte Öffnung in die Kammer hinein; eine innerhalb der Wellenleitung (10) angeordnete Öffnung (20) zum Einsetzen der das Gewebe haltenden Mittel (22, 38) innerhalb des zweiten Abschnittes (14), wobei diese Öffnung (20) so an der Wellenleitung (10) angeordnet ist, daß ein im wesentlichen gleichförmiges E-Feld der Hochfrequenzenergie durch die das Gewebe haltenden Mittel (22, 38) hervorgerufen wird, wenn diese eingesetzt sind; und
Impedanzanpassungsmittel (28), die innerhalb des genannten zweiten Abschnittes (14) angeordnet sind, um innerhalb der Wellenleitung (10) eine Impedanz vorzusehen, bei der minimale Mikrowellenenergie zu den Sendermitteln (18) reflektiert wird.

2. Apparat nach Anspruch 1, gekennzeichnet durch Mittel (24, 26) zur Einstellung der Länge, mit der die das Gewebe haltenden Mittel (22, 38) in den genannten zweiten Abschnitt (14) hinein ragen, so daß die Hochfrequenzenergie-Reflexion innerhalb der Wellenleitung (10) fein eingestellt wird.

3. Apparat nach Anspruch 1 oder 2, gekennzeichnet durch Mittel (30) zur Drosselung von Mikrowellenenergie, die durch die genannte Öffnung (20) aus der Wellenleitung (10) entweicht.

4. Apparat nach Anspruch 1 oder 2 oder 3, gekennzeichnet durch Mittel (40, 42) zum verhindern der Ansammlung von Feuchtigkeit oder einem ionisierten Gas auf den das Gewebe haltenden Mitteln (22, 38).

5. Apparat nach einem der vorhergehenden Ansprüche, gekennzeichnet durch Testeinrichtungen (50, 48, 74, 76) zur Messung der Menge von Mikrowellenenergie, die in der Wellenleitung reflektiert wird; und Zirkulatoreinrichtungen (46), die zwischen den Mikrowellensendermitteln (18) und der Wellenleitung (10) angeordnet sind, um Mikrowellenenergie von den Mikrowellensendermitteln (18) in die genannte Kammer zu leiten und reflektierte Energie, von der genannten Kammer zu den Prüfeinrichtungen (50, 48, 74, 76) zu leiten.

6. Apparat nach einem der vorhergehenden Ansprüche, dadurch gekennzeichnet, daß die das Gewebe haltenden Mittel eine Phiole (22) enthalten.

7. Apparat nach einem der vorhergehenden Ansprüche, dadurch gekennzeichnet, daß die Impedanzanpassungsmittel die Gestalt induktiver Stifte (28) haben, die zwischen der genannten Öffnung (20) und der Wand (16) angeordnet sind.

8. Apparat nach Anspruch 6, dadurch gekennzeichnet, daß die Phiole (22) Mittel (38) enthält, die an die Innenwand der Phiole (22) angrenzend vorgesehen sind, um zu verhindern, daß das Gewebe (36) die Seiten der Phiole (22) berührt.

9. Apparat nach Anspruch 8, dadurch gekennzeichnet, daß die die Berührung verhindernden Mittel (38) nahe dem Boden der Phiole (22) angeordnet sind.

10. Apparat nach Anspruch 9, dadurch gekennzeichnet, daß die eine Berührung verhindernden Mittel von Schaum (38) gebildet sind, der 0,0254 bis 0,762 cm (0.01 bis 0,3 Zoll) dick ist.

11. Apparat nach einem der vorhergehenden Ansprüche, dadurch gekennzeichnet, daß die Wellenleitung (10) einen einzigen Resonanzmodus hat.

12. Apparat nach einem der vorhergehenden Ansprüche, dadurch gekennzeichnet, daß der zweite Abschnitt (14) eine Wellenleitung verminderter Höhe bildet.

13. Apparat nach einem der vorhergehenden Ansprüche, dadurch gekennzeichnet, daß die Wellenleitung (10) eine Breite von 6,35 bis 11,43 cm (2,5 bis 4,5 Zoll) und eine Höhe von 3,175 bis 5,842 cm (1,25 bis 2,3 Zoll) hat.

14. Verfahren zum Fixieren von Gewebe mit den Schritten des Einbringens des zu fixierenden Gewebes (36) in eine Fixierlösung (34) innerhalb eines Behältnisses (22), und des Bestrahlens des Gewebes (36) und der Lösung (34) mit Hochfrequenzenergie, gekennzeichnet durch:
Einsetzen des Behältnisses (22) in eine Wellenleitung (10), die eine Kammer mit einem ersten und einem zweiten Abschnitt (12, 14) darin hat; Einbringen (18) von Hochfrequenzenergie in die Wellenleitung (10) derart, daß sich ein im wesentlichen gleichförmiges E-Feld durch das genannte Behältnis (22) hindurch bildet; und
Vorsehen einer solchen Impedanz innerhalb der genannten Kammer, daß minimale Hochfrequenzenergie aus der Wellenleitung heraus (10) reflektiert wird.

15. Verfahren nach Anspruch 14, gekennzeichnet durch den Schritt der Einstellung der Länge, mit der das genannte Behältnis (22) in den zweiten Abschnitt (40) vorsteht, so daß die Anpassungs-Impedanz innerhalb der Wellenleitung (10) fein eingestellt wird.

16. Verfahren nach Anspruch 14 oder 15, gekennzeichnet durch den Schritt des Verhinderns eines Entweichens von Hochfrequenzenergie dort, wo das Behältnis (22) in die Wellenleitung (10) eingesetzt ist.

17. Verfahren nach einem der Ansprüche 14 bis 16, gekennzeichnet durch den Schritt des Verhinderns der Ansammlung von Feuchtigkeit auf der Außenfläche des genannten Behältnisses (22).

18. Verfahren nach einem der Ansprüche 14 bis 17, gekennzeichnet durch die Schritte der Abstützung des Gewebes (36) in der Mitte des Behältnisses (22) und des Verhinderns einer Berührung des Gewebes (36) mit den Seiten des Behältnisses (22).

19. Verfahren nach einem der Ansprüche 14 bis 18, gekennzeichnet durch den Schritt der Einstellung der Dauer der Hochfrequenzenergie in der Wellenleitung (10).

20. Verfahren nach einem der Ansprüche 14 bis 19, gekennzeichnet durch folgende Schritte:
Lieferung (52) einer Hochfrequenzenergie niedrigeren Leistungspegels an das Behältnis (22);
Messen (48, 74, 50) des reflektierten Leistungspegels der Hochfrequenzenergie; und
Einstellung der Länge, mit der das Behältnis (22) in den genannten zweiten Abschnitt (14) vorsteht, um so die reflektierte Energie zu vermindern.

21. Apparat zum Fixieren von Gewebe mit Mitteln (22), welche Gewebe (36) in eine Fixierlösung (34) eingetaucht halten, und Mitteln (18, 10), um das Gewebe (36) und die Lösung (34) mit Hochfrequenzenergie zu bestrahlen, dadurch gekennzeichnet, daß die Mittel zum Halten des Gewebes (36) eine Phiole (22) umfassen und daß die Bestrahlungsmittel folgendes enthalten:
Eine einen einzigen Resonanzmodus aufweisende Wellenleitung (10), die eine Kammer aufweist, in der ein erster Abschnitt (11) und ein zweiter Abschnitt (14) gebildet sind, wobei die Wellenleitung (10) an einem Ende eine Öffnung und am anderen Ende eine Wand (16) hat;
Mittel (18) zum Senden von Hochfrequenzenergie durch die genannte Öffnung in die Kammer hinein;
eine Öffnung (20), die sich innerhalb der Wellenleitung befindet, zum Einsetzen der Phiole (22) in den zweiten Abschnitt (14), wobei diese Öffnung (20) so an der Wellenleitung (10) positioniert ist, daß ein im wesentlichen gleichförmiges E-Feld der Hochfrequenzenergie durch die Phiole (22) verursacht wird, wenn diese eingesetzt ist; und
einen induktiven Stift (28), der sich innerhalb des zweiten Abschnittes (14) findet, um eine Impedanz innerhalb der Wellenleitung (10) zu schaffen, bei der minimale Mikrowellenenergie zurück zu den Sendermitteln (18) reflektiert wird.

22. Apparat nach Anspruch 21, dadurch gekennzeichnet, daß der genannte zweite Abschnitt (14) gegenüber dem ersten Abschnitt (12) eine reduzierte Höhe hat.

23. Apparat nach Anspruch 21 oder 22, gekennzeichnet durch einen Feineinstellstift (24), der in den genannten zweiten Abschnitt (14) hinein ragt und die Phiole (22) abstützt, wobei der Einstellstift mit Mitteln (26) zur Einstellung der Länge dieses Einstellstiftes (24) versehen ist, die in die genannte Kammer hineinsteht, so daß eine Feineinstellung der Menge von Hochfrequenzenergie ermöglicht ist, welche das Gewebe (36) trifft.

24. Apparat nach einem der Ansprüche 21 bis 23, gekennzeichnet durch an die Innenwand der Phiole (22) angrenzende Mittel, welche verhindern, daß das Gewebe (36) die Seiten der Phiole (22) berührt.

25. Apparat nach einem der Ansprüche 21 bis 24, gekennzeichnet durch eine Luftleitung (40) und ein Gebläse (42) enthaltende Mittel zum Verhindern der Ansammlung von Feuchtigkeit oder ionisiertem Gas an der Außenseite der Phiole (22) durch Hinblasen von Luft auf die Phiole (22), wenn sich diese in dem genannten zweiten Abschnitt (14) befindet.

26. Apparat nach einem der Ansprüche 21 bis 25, dadurch gekennzeichnet, daß die Wellenleitung (10) eine Breite von 6,35 bis 11,43 cm (2,5 bis 4,5 Zoll) und eine Höhe von 3,175 bis 5,842 cm (1,25 bis 2,3 Zoll) hat.

## Revendications

1. Appareil pour fixer des tissus, comprenant :
des moyens (22, 38) pour maintenir un tissu (36) immergés dans une solution de fixation (34) ; et des moyens (18, 10) pour exposer le tissu (36) et la solution (34) à une énergie à haute fréquence, caractérisé en ce que les moyens d'exposition (10) comprennent
un guide d'onde (10) ayant une cavité formée en lui avec une première section (12), une deuxième section (14) et une section de transition (13) formée entre elles, ledit guide d'onde (10) ayant une ouverture à une extrémité et une paroi (16) à l'autre extrémité ;
des moyens (18) pour transmettre ladite énergie à haute fréquence à travers ladite ouverture et dans ladite cavité ;
une ouverture (20) disposée dans le guide d'onde (10) pour l'insertion des moyens de maintien de tissu (22, 38) dans la deuxième section (14) l'ouverture (20) étant positionnée sur le guide d'onde (10) de manière à provoquer un champ électrique pratiquement uniforme de ladite énergie à haute fréquence à travers les moyens de maintien de tissus (22, 38) quand ils sont insérés ; et
des moyens d'adaptation d'impédance (28), disposés dans ladite deuxième section (14) pour fournir une impédance dans le guide d'onde (10) dans lequel une énergie minimale à micro-ondes est réfléchie en retour vers les moyens de transmission (18).

2. Appareil selon la revendication 1, caractérisé par des moyens (24, 26) pour régler la longueur dont les moyens de maintien de tissu (22, 38) s'avancent dans ladite deuxième section (14) afin de régler de manière fine la réflexion d'énergie à haute fréquence dans le guide d'onde (10).

3. Appareil selon la revendication 1 ou 2, caractérisé par des moyens (30) pour capturer de l'énergie à micro-ondes s'échappant du guide d'onde (10) à travers ladite ouverture (20).

4. Appareil selon la revendication 1, 2 ou 3, caractérisé par
des moyens (40, 42) pour empêcher de l'humidité ou tout gaz ionisé de se rassembler sur les moyens de maintien de tissu (22, 38).

5. Appareil selon l'une quelconque des revendications précédentes, caractérisé par
des moyens de test (50, 48, 74, 76) pour mesurer la quantité d'énergie à micro-ondes réfléchie dans ledit guide d'onde ; et
des moyens de circulateur (46), disposés entre les moyens de transmission de micro-ondes (18) et le guide d'onde (10) pour distribuer l'énergie à micro-ondes des moyens de transmission de micro-ondes (18) vers ladite cavité et distribuer l'énergie réfléchie de ladite cavité vers les moyens de test (50, 48, 74, 76).

6. Appareil selon l'une quelconque des revendications précédentes, caractérisé en ce que les moyens de maintien de tissu comprennent un flacon (22).

7. Appareil selon l'une quelconque des revendications précédentes, caractérisé en ce que les moyens d'adaptation d'impédance sont sous la forme de tiges inductives (28) positionnées entre ladite ouverture (20) et ladite paroi (16).

8. Appareil selon la revendication 6, caractérisé en ce que le flacon (22) contient des moyens (38), disposés de manière adjacente au périmètre intérieur du flacon (22), pour empêcher ledit tissu (36) de toucher les côtés du flacon (22).

9. Appareil selon la revendication 8, caractérisé en ce que les moyens d'empêchement (38) sont disposés de manière adjacente au fond du flacon (22).

10. Appareil selon la revendication 9, caractérisé en ce que les moyens d'empêchement (38) sont une mousse dont l'épaisseur est de 0,0254 à 0,762 cm (0,01 à 0,3 pouces).

11. Appareil selon l'une quelconque des revendications précédentes, caractérisé en ce que le guide d'onde (10) est résonant monomode.

12. Appareil selon l'une quelconque des revendications précédentes, caractérisé en ce que la deuxième section forme un guide d'onde de hauteur réduite.

13. Appareil selon l'une quelconque des revendications précédentes, caractérisé en ce que le guide d'onde (10) a une largeur de 6,35 à 11,43 cm (2,5 à 4,5 pouces) et une hauteur de 3,175 à 5,842 cm (1,25 à 2,3 pouces).

14. Procédé pour fixer un tissu, comprenant les étapes suivantes :
placer le tissu (36) à fixer dans une solution de fixation (34) dans un récipient (22), et exposer le tissu (36) et la solution (34) à une énergie à haute fréquence, caractérisé en ce qu'il comprend en outre
placer le récipient (22) dans un guide d'onde (10) ayant une cavité avec une première et une deuxième sections (12, 14) formées en elle ;
fournir (18) une énergie à haute fréquence dans le guide d'onde (10) de sorte qu'un champ électrique pratiquement uniforme se forme à travers ledit récipient (22) ; et
fournir une impédance dans ladite cavité dans laquelle une énergie minimale à haute fréquence est émise par réflexion par le guide d'onde (10).

15. Procédé selon la revendication 14, caractérisé par l'étape consistant à régler la longueur dont ledit récipient (22) s'avance dans ladite deuxième section (14) afin de régler de manière fine l'impédance d'adaptation dans le guide d'onde (10).

16. Procédé selon la revendication 14 ou 15, caractérisé par l'étape consistant à empêcher une énergie à haute fréquence de s'échapper de l'endroit où ledit récipient (22) est inséré dans le guide d'onde (10).

17. Procédé selon l'une quelconque des revendications 14 à 16, caractérisé par l'étape consistant à empêcher l'humidité de se rassembler sur la surface extérieure dudit récipient (22).

18. Procédé selon l'une quelconque des revendications 14 à 17, caractérisé par les étapes consistant à suspendre un tissu (36) au centre dudit récipient (22) et à empêcher ledit tissu (36) de toucher les côtés dudit récipient (22).

19. Procédé selon l'une quelconque des revendications 14 à 18, caractérisé par l'étape consistant à régler la durée de l'énergie à haute fréquence dans le guide d'onde 10.

20. Procédé selon l'une quelconque des revendications 14 à 19, caractérisé par les étapes suivantes
fournir (52) une énergie à haute fréquence de faible niveau de puissance audit récipient (22) ;
mesurer (48, 74, 50) le niveau de puissance réfléchie de ladite énergie à haute fréquence ; et
régler la longueur dont ledit récipient (22) s'avance dans ladite deuxième section (14) afin de réduire ladite énergie réfléchie.

21. Appareil pour fixer des tissus, comprenant :
des moyens (22) pour maintenir un tissu (36) immergés dans une solution de fixation (34) ; et des moyens (18, 10) pour exposer le tissu (36) et la solution (34) à une énergie à haute fréquence, caractérisé en ce que les moyens pour maintenir un tissu (36) comprennent un flacon (22) ; et que les moyens d'exposition comprennent un guide d'onde (10) résonant monomode ayant une cavité formée en lui avec une première section (12) et une deuxième section (14), le guide d'onde (10) ayant une ouverture à une extrémité et une paroi (16) à l'autre extrémité ;
des moyens (18) pour transmettre une énergie à haute fréquence à travers ladite ouverture dans ladite cavité ;
une ouverture (20) disposée dans le guide d'onde pour l'insertion du flacon (22) dans ladite deuxième section (14), l'ouverture (20) étant positionnée sur le guide d'onde (10) de manière à provoquer un champ électrique pratiquement uniforme de ladite énergie à haute fréquence à travers le flacon (22) quand il est inséré ; et
une tige inductive (28), disposée dans ladite deuxième section (14) pour fournir une impédance dans le guide d'onde (10) dans lequel une énergie minimale à micro-ondes est réfléchie en retour vers les moyens de transmission (18).

22. Appareil selon la revendication 21, caractérisé en ce que ladite deuxième section (14) a une hauteur réduite par rapport à ladite première section (12).

23. Appareil selon la revendication 21 ou 22, caractérisé par une tige de réglage micrométrique (24) s'avançant dans ladite deuxième section (14) et supportant le flacon (22), la tige de réglage ayant des moyens (26) pour régler la longueur de la tige de réglage (24) qui s'avance dans ladite cavité, afin de régler de manière fine la quantité d'énergie à haute fréquence atteignant ledit tissu (36).

24. Appareil selon l'une quelconque des revendications 21 à 23, caractérisé par des moyens (38) disposés de manière adjacente au périmètre intérieur du flacon (22) pour empêcher le tissu (36) de toucher les côtés du flacon (22).

25. Appareil selon l'une quelconque des revendications 21 à 24, caractérisé par des moyens, ayant un conduit d'air (40) et un ventilateur (42), pour empêcher de l'humidité ou un gaz ionisé de se rassembler sur l'extérieur du flacon (22) en soufflant de l'air sur le flacon (22) quand le flacon (22) est dans ladite deuxième section (14).

26. Appareil selon l'une quelconque des revendications 21 à 25, caractérisé en ce que le guide d'onde (10) a une largeur de 6,35 à 11,43 cm (2,5 à 4,5 pouces) et une hauteur de 3,175 à 5,842 cm (1,25 à 2,3 pouces).
